# EUROPEAN PATENT APPLICATION

(11) **EP 2 988 377 A1**
(43) Date of publication of application: **24.02.2016**
(21) Application number: 15181533.9
(22) Date of filing: 19.08.2015
(51) Int. Cl.: H01R 31/06, H01R 103/00

(54) **ELECTRONIC DEVICE**

(30) Priority: 22.08.2014 CN 201420477596 U; 21.10.2014 CN 201420609651 U
(71) Applicant: Delta Electronics, Inc., Taoyuan City 333 (TW)
(72) Inventor: CHEN, Xiao-Jun, 333 Taoyuan City (TW)
(74) Representative: Boult Wade Tennant

(57) **Abstract**

An electronic device includes an electronic device body (110) and a connector component (120). The electronic device body includes a housing (112) and at least two terminals (114,116). The connector component is detachably connected to the electronic device body. The connector component includes a connector casing (122) and at least two pins (124,126). When the connector component is connected to the electronic device body in a first mode, the pins are in a first extended direction. When the connector component is connected to the electronic device body in a second mode, the pins are in a second extended direction. An angle is formed between the first and second extended directions.

## Description

### BACKGROUND

### Field of Invention

The present invention relates to an electronic device. More particularly, the present invention relates to an electronic device having a charging function.

### Description of Related Art

With the development of 3C (Computer, Communications and Consumer) industry, more and more people use mobile electronic devices in their daily lives, for example, common mobile electronic devices like personal digital assistants (PDA), mobile phones, smart phones, tablet personal computers (PCs), and notebook computers. Mobile electronic devices like these are small and light and convenient to carry. Hence, user population becomes larger and larger and more and more functions are demanded.

Mobile electronic devices need to be supplied by stable power. It is quite usual that interferences or congestion occur and the space may not be fully used when two or more chargers are positioned near each other for electrically connecting to electricity power.

For the forgoing reasons, there is a need to solve the above-mentioned problems by providing an electronic device.

### SUMMARY

According to an embodiment of the present invention, an electronic device is provided. In particular, an electronic device having a charging function is provided. The electronic device can be charged at different plugging directions selectively.

An electronic device is provided according to an embodiment. The electronic device comprises an electronic device body and a connector component. The electronic device body comprises a housing and at least two terminals. The connector component is detachably connected to the electronic device body. The connector component comprises a connector casing and at least two pins. The pins are in a first extended direction when the connector component is connected to the electronic device body in a first mode. The pins are in a second extended direction when the connector component is connected to the electronic device body in a second mode. An angle is formed between the first extended direction and the second extended direction.

According to an embodiment of the present invention, electronic equipment using the above-mentioned electronic device is provided.

The electronic device may charge itself or another object. The electronic device may provide different plugging directions, however, the present invention is not limited to this. When the electronic device is to be used, the pins may be allowed to be plugged in different directions. As a result, the flexibility in space utilization is effectively improved to solve the problem that too many chargers cannot be charged at the same time because of space congestion.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a schematic diagram of an electronic device having a charging function when in use according to one embodiment of this invention;
Fig. 2A is a schematic diagram of an appearance of an electronic device according to an embodiment of this invention;
Fig. 2B is an exploded view of an electronic device according to an embodiment of this invention;
Fig. 3A and Fig. 3B are schematic diagrams of the electronic device in Fig. 2A at different stages when connected in a first mode;
Fig. 4A and Fig. 4B are schematic diagrams of the electronic device in Fig. 2A at different stages when connected in a second mode;
Fig. 5 to Fig. 8 are exploded views of electronic devices respectively according to different embodiments of this invention;
Fig. 9A and Fig. 9B are schematic diagrams of the electronic device in Fig. 8 after being assembled respectively in the first mode and the second mode;
Fig. 10 is a schematic diagram of the connector casing in Fig. 8 viewed from another angle;
Fig. 11 is an exploded view of an electronic device according to still another embodiment of this invention;
Fig. 12A and Fig. 12B are schematic diagrams of the electronic device in Fig. 11 after being assembled respectively in the first mode and the second mode; and
Fig. 13A and Fig. 13B are schematic diagrams of the electronic device respectively in Fig. 12A and Fig. 12B after being assembled with part of the housing being hidden.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

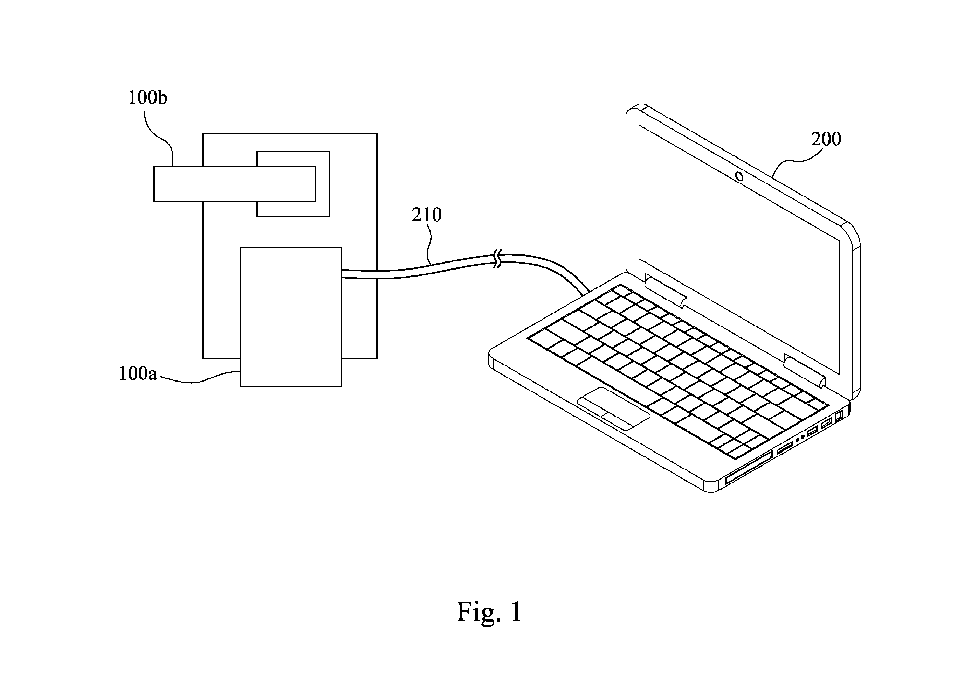

Fig. 1 is a schematic diagram of an electronic device having a charging function when in use according to one embodiment of this invention. According to the embodiment, the electronic device may be plugged into a socket and charged by electrical power. For example, the electronic device mav be a charger 100a having a transformation function to transform alternating current to direct current. A mobile electronic device 200 may be connected to the charger 100a through a wire 210 so as to be charged by electrical power. Or, in another embodiment, the electronic device having a charging function may be a mobile power supply 100b. The mobile power supply 100b can be plugged into the socket directly to charge. Since there can be multiple chargers 100a and/or mobile power supplies 100b plugged into the wall at the same time, the electronic device disclosed in the present invention can provide a plurality of angles to choose when plugged into a socket, to allow users to adjust depending on practical requirements so as to avoid the mutual interferences among the chargers 100a and/or mobile power supplies 100b.

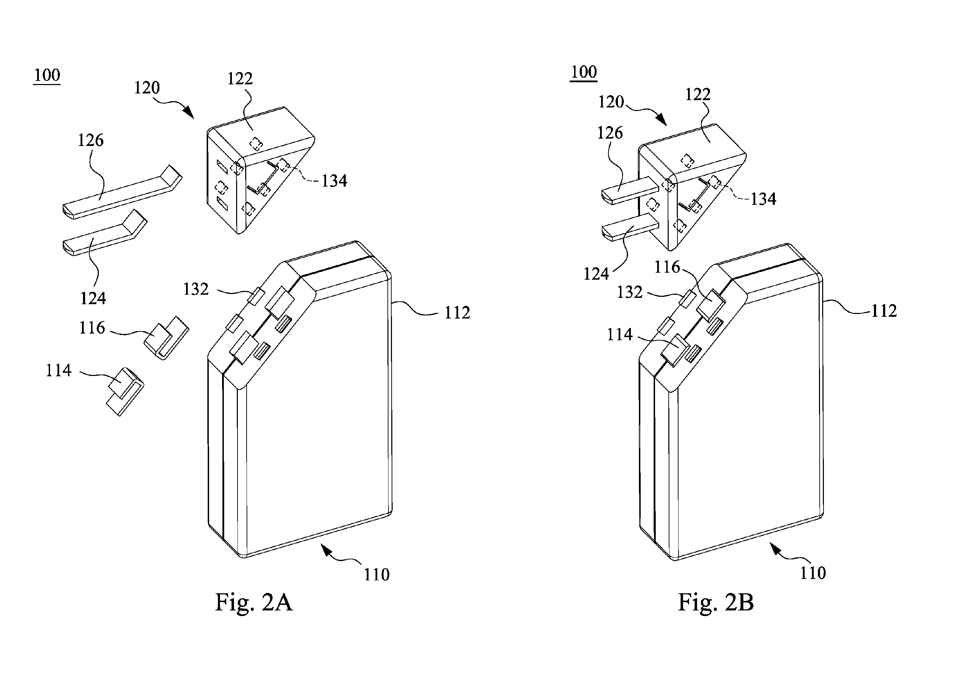

Fig. 2A is a schematic diagram of an appearance of an electronic device according to an embodiment of this invention. Fig. 2B is an exploded view of an electronic device according to the embodiment of this invention. The electronic device 100 comprises an electronic device body 110 and a connector component 120 detachably connected to the electronic device body 110. The electronic device body 110 comprises a housing 112 and two terminals 114, 116. The terminals 114, 116 according to the present embodiment may be exposed from the housing 112. In other embodiments, the terminals may be disposed in the housing 112. However, the present invention is not limited in this regard. The electronic device body 110 may comprise functional modules disposed in the housing 112, such as a transformer board, a battery, but the present invention is not limited in this regard. The terminals 114, 116 may be connected to part of the functional modules. The connector component 120 comprises a connector casing 122 and two pins 124, 126 disposed on the connector casing 122, the present invention is not limited in this regard, for example, the connector component 120 may comprise one or more pins. The pins 124, 126 according to the present embodiment may be exposed from the connector casing 122. In other embodiments, the pins may be disposed in the connector casing 122, but the present invention is not limited in this regard, for example, the pins may be fixed or moveable. The connector component 120 may be plugged into the socket and electrical power may be transmitted to the electronic device body 110 by conducting the pins 124, 126, but the present invention is not limited in this regard.

In the present embodiment, the connector component 120 may be detachably connected to the electronic device body 110. That is, the connector component 120 may be connected to the electronic device body 110 by many modes, and users can select the connection mode and make the connector component 120 be connected to the electronic device body 110 flexibly depending on different requirements. The electronic device 100 can thus provide with two or more choices of angles when plugged into the socket. In the following, a detailed description is provided with reference to drawings and embodiments. In some embodiments, the electronic device may be in a cubic shape, or may be in a shape of a cuboid having rounded corners diagonal to each other, or may be in other shapes, regular or irregular shapes, but the present invention is not limited in this regard.

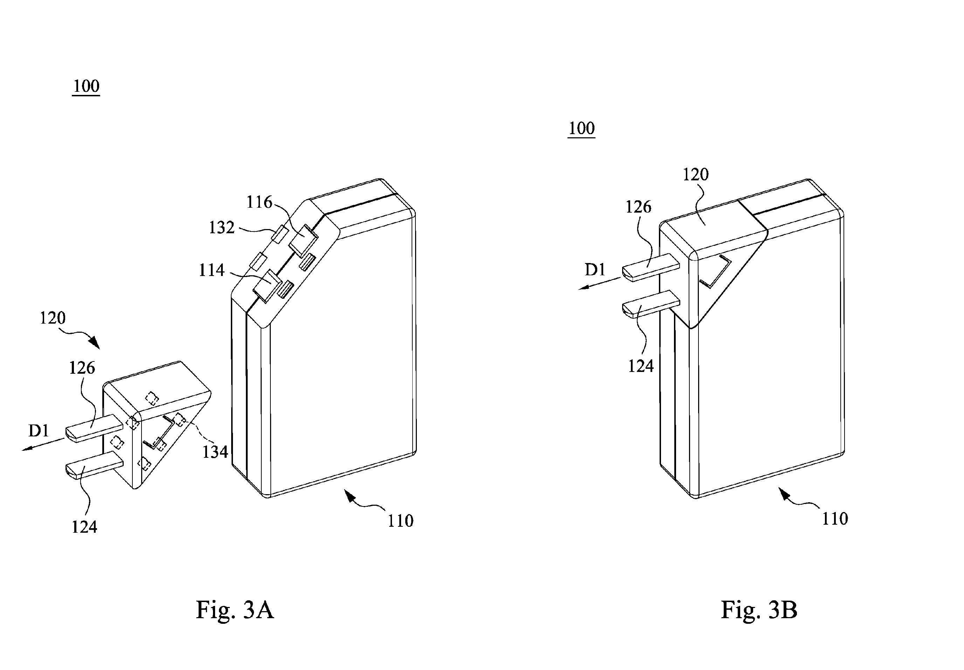

Fig. 3A and Fig. 3B are schematic diagrams of the electronic device in Fig. 2A at different stages when connected in a first mode. In the present embodiment, the connector component 120 may be connected to the electronic device body 110 by slide-way style. In greater detail, slide structures 132, 134 may be respectively disposed on the electronic device body 110 and the connector component 120. When the connector component 120 is connected to the electronic device body 110, the slide structures 132 on the electronic device body 110 may cross gaps between the two slide structures 134 on the connector component 120 to allow the connector component 120 and the electronic device body 110 to be connected with each other, as shown in Fig. 3B.

In greater detail, after the connector component 120 has been connected to the electronic device body 110, the electronic device 100 may be substantially in a shape of a cuboid. The connector component 120 may be a corner of the cuboid. However, the present invention is not limited in this regard. In the present embodiment, the pins 124, 126 are in a first extended direction D1 extending outwardly from the electronic device 100. Taking the first mode for example, after the connector component 120 has been connected to the electronic device body 110, the pins 124, 126 may be located on a long side surface of the electronic device 100. The pins 124, 126 point in the first extended direction D1. At this time, the electronic device 100 can be plugged into the socket horizontally.

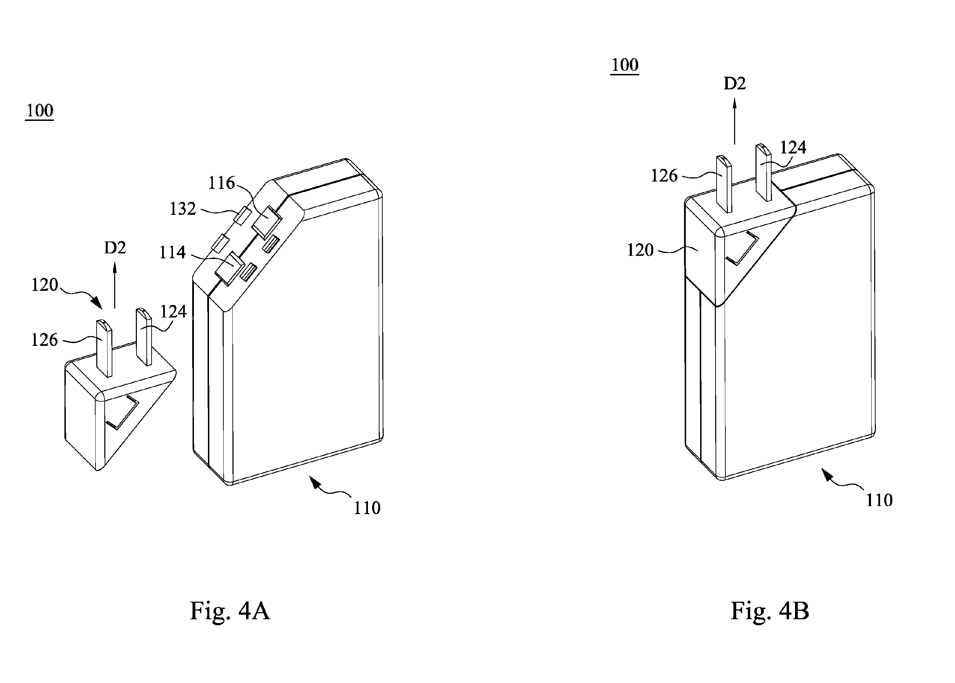

Fig. 4A and Fig. 4B are schematic diagrams of the electronic device in Fig. 2A at different stages when connected in a second mode. The connector component 120 may also be connected to the electronic device body 110 through the slide structures 132, 134 by slide-way style. However, when compared with the connection method shown in Fig. 3A and Fig. 3B, the connector component 120 according to the present embodiment may be rotated by 180 degrees.

After the connector component 120 has been connected to the electronic device body 110 in a second mode, the pins 124, 126 are in a second extended direction D2 extending outwardly from the connector casing 122, and the second extended direction D2 is different from the first extended direction in Fig. 3B. In greater detail, after the connector component 120 has been connected to the electronic device body 110 in the second mode, the pins 124, 126 are located on a short side surface of the electronic device 100. The pins 124, 126 point in the second extended direction D2. At this time, the electronic device 100 may be plugged into the socket vertically.

A description is provided with reference to Fig. 3B and Fig. 4B. The connector component 120 can be detachably connected to the electronic device body 110. In addition, the pins 124, 126 on the connector component 120 extend towards the first extended direction D1 when the connector component 120 is connected to the electronic device body 110 in the first mode, and the pins 124, 126 on the connector component 120 extend towards the second extended direction D2 when the connector component 120 is connected to the electronic device body 110 in the second mode. An angle is formed between the first extended direction D1 and the second extended direction D2. That is, the first extended direction D1 is not parallel with the second extended direction D2 so the angle formed between them is not zero degree. The pins 124, 126 thus may extend towards different directions respectively in the first mode and the second mode to so as to utilize the space reasonably. For example, the first extended direction D1 may be substantially perpendicular to the second extended direction D2 according to the present embodiment. There may be multiple choices for the angle between the first extended direction D1 and the second extended direction D2 based on the various appearances of the electronic device so that various embodiments are suitable for more applications, and the present invention is not limited in this regard.

In order to allow the pins 124, 126 to still be electrically connected to the terminals 114, 116 on the electronic device body 110 successfully after the connector component 120 has been turned an angle, the connector component 120 preferably may have an appearance symmetrical to a center line of the terminals 114, 116, and the pins 124, 126 and the terminals 114, 116 may be symmetrically arranged. However, the present invention is not limited in this regard. It is within the scope of the present invention once the functions of the electronic device can be achieved. In greater detail, the connector casing 122 of the connector component 120 according to the present embodiment may be in a shape of a triangular form. The pins 124, 126 may be disposed on one side surface of the connector casing 122. Pins 124, 126 may have different lengths. However, the present invention is not limited in this regard.

In greater detail, according to the present embodiment, the pins comprise a first pin 124 and a second pin 126. The terminals comprise a first terminal 114 and a second terminal 116. When the connector component 120 is connected to the electronic device body 110 in the first mode, the first pin 124 may be electrically connected to the first terminal 114 and the second pin 126 may be electrically connected to the second terminal 116. When the connector component 120 is connected to the electronic device body 110 in the second mode, the first pin 124 may be electrically connected to the second terminal 116 and the second pin 126 may be electrically connected to the first terminal 114.

However, an appearance of the connector casing 122, shapes and disposition positions of pins 124, 126, a connection method for connecting the connector component 120 and the electronic device body 110, and the angle formed between the first extended direction D1 and the second extended direction D2 may be changed depending on different design requirements. The present invention is not limited in this regard. For example, the connector casing 122 may be in a shape of a semicircular column or a trapezoidal form. The pins 124, 126 may be disposed side by side on the connector casing 122 and have same lengths. In the following embodiments, a description mainly of the features different from the present embodiment is provided, whereas a description of the same may not be provided.

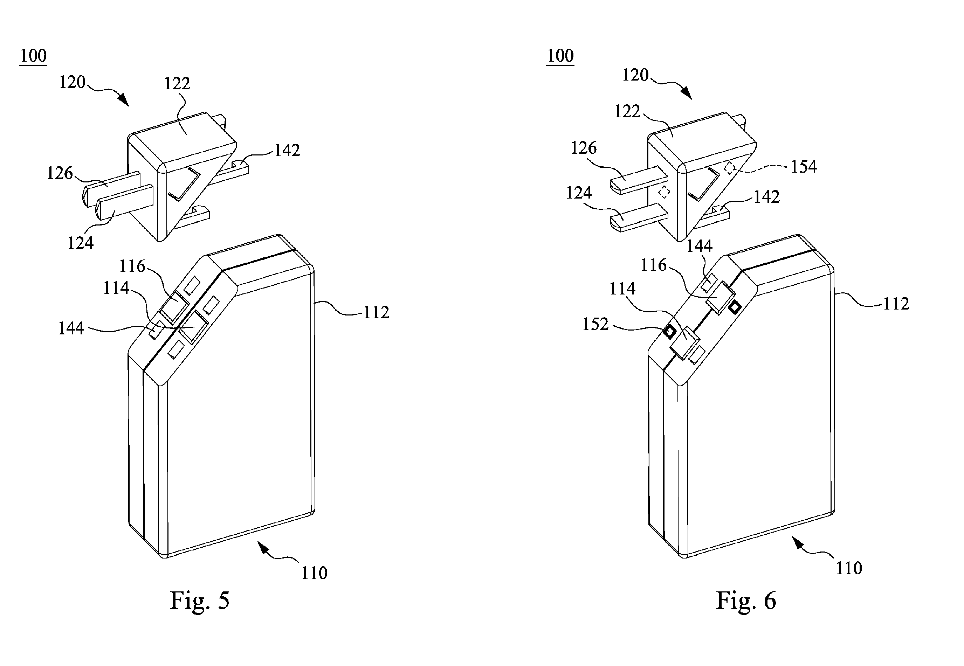

Fig. 5 is an exploded view of an electronic device according to another embodiment of this invention. The electronic device 100 comprises an electronic device body 110 and a connector component 120 detachably connected to the electronic device body 110. The electronic device body 110 comprises a housing 112 two terminals 114, 116. The connector component 120 comprises a connector casing 122 and two pins 124, 126. Orientations of the pins 124, 126 and the terminals 114, 116 may be both different from those of the previous embodiment, and the pins 124, 126 may be disposed side by side on the connector casing 122 and may have same lengths.

The connector component 120 may be snap-fitted to the electron device body 110. For example, the connector casing 122 may have at least two hooks 142 extending towards the electronic device body 110. The electronic device body 110 may have at least two slots 144 corresponding to the hooks 142 so that the connector component 120 is connected to the electronic device body 110 by snap-fitting the hooks 142 to the slots 144. Similarly, positions of the hooks 142 and the slots 144 may be preferably symmetrical to the center line of the terminals 114, 116 to allow the connector component 120 to be connected to the electron device body 110 in both the first mode and the second mode. However, the present invention is not limited in this regard, for example, other snap-fitting styles may be used.

Fig. 6 is an exploded view of an electronic device according to still another embodiment of this invention. The present embodiment differs from the previous embodiments in that the connector component 120 and the electronic device body 110 may be fixed by magnetic forces. In greater detail, one or more magnetic elements 152 may be disposed on the electronic device body 110. One or more magnetic elements 154 may be disposed on the connector casing 122 correspondingly so as to fix the connector component 120 on the electronic device body 110 by magnetic forces between the magnetic elements 152 and the magnetic elements 154. Hooks 142 and slots 144 may be further disposed on the connector component 120 and the electronic device body 110, respectively, to help connect the electronic device body 110 and the connector component 120 more firmly. The magnetic forces between the magnetic elements 152 and the magnetic elements 154 may also assist in positioning and improving consumer's feeling during operation. In order to allow the connector component 120 to still be able to connect with the electronic device body 110 normally after having been turned an angle, both the magnetic elements 152 and the slots 144 may be disposed on the electronic device body 110 at two diagonally opposite corners, both the magnetic elements 154 and the hooks 142 may be disposed on the connector casing 122 at two diagonally opposite corners, but the invention is not limited to this regard. In this disclosure, the magnetic element can be but not limited to the element directly or indirectly generating magnetic power. For example, the magnetic element can be made of soft magnetic material, such as iron. In some embodiments, the magnetic component may only be positioned in the connector component or the electronic device body. In some embodiments, an angle between the first extended direction and the second extended direction is about 30 degrees, 45 degrees, 60 degrees, 75 degrees, 90 degrees, 120 degrees, 135 degrees, 150 degrees, 165 degrees, 180 degrees, or the like.

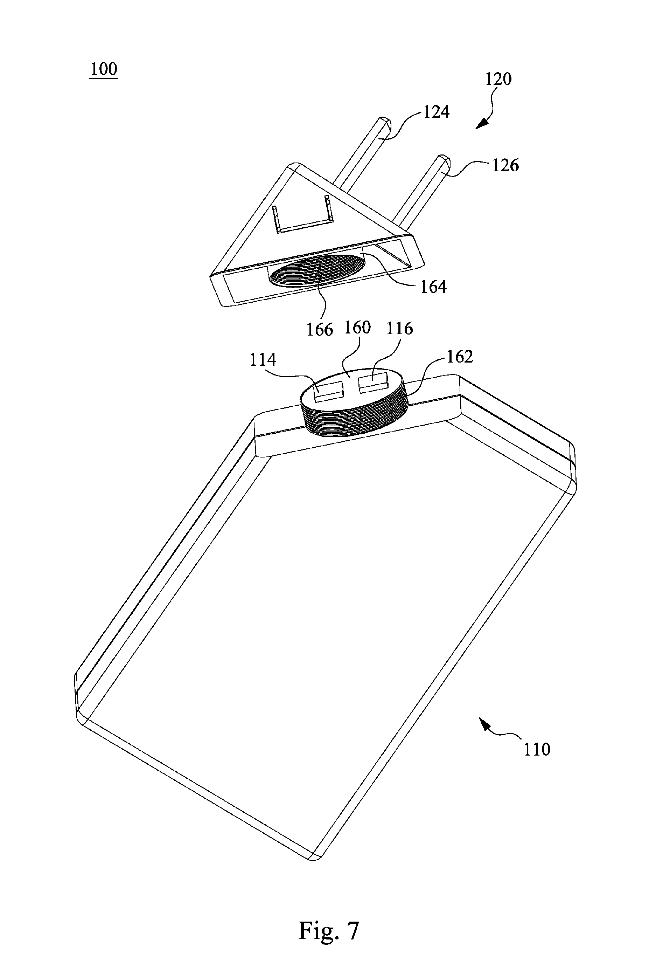

Fig. 7 is an exploded view of an electronic device according to yet another embodiment of this invention. In the present embodiment, the electronic device body 110 and the connector component 120 are fixed by screwing-style. In greater detail, a cylindrical projection 160 may be disposed on the electronic device body 110. An outer wall 162 of the cylindrical projection 160 may have a screw thread. A material of the cylindrical projection 160 may be an insulation material. At least two terminals 114, 116 of the electronic device body 110 may be positioned on an upper surface of the cylindrical projection 160. The connector component 120 has at least two pins 124, 126. A hollow sleeve portion 164 may be formed in the connector component 120. Similarly, an inner wall 166 of the sleeve portion 164 may have a screw thread, and the sleeve portion 164 may match with the cylindrical projection 160 to allow the connector component 120 and the electronic device body 110 to be fixed. It is noted that forms of the screw threads may be more preferably determined through design so that the pins 124, 126 may be allowed to extend outwardly in at least a first extended direction and a second extended direction.

Ends of the pins 124, 126 hidden in the connector casing 122 can be electrically connected to the terminals 114, 116 on the cylindrical projection 160 directly or indirectly. For example, special shapes of the pins 124, 126 may be used to help connect directly. Or, in other embodiments, the pins 124, 126 may be connected to the terminals 114, 116 by utilizing a middle conductor (such as a conduction wire). In some embodiments, one end of the middle conductor (such as one end of the conduction wire) may even be fixed to the terminals 114, 116 on the cylindrical projection 160 through, for example, soldering. Under the circumstances, the connector component 120 may not need to be completely separated from the electronic device body 110 before it can operate according to such embodiments. In some embodiments, when cooperating with a limiting mechanism, a rotation angle of the connector component 120 with respect to the electronic device body 110 may be limited to not exceeding 360 degrees, but the resent invention is not limited in this regard.

In some embodiments, based on the cooperation method between the electronic device body and the connector component to change from one mode to another mode, the electronic device body and the connector component may be completely separated, such as plugging style; in some embodiments, the electronic device body and the connector component may be not completely separated, such as connecting with an internal connecting wires; in some embodiments, the electronic device body and the connector component may be not separated, such as a rotational type. However, the present invention is not limited in this regard.

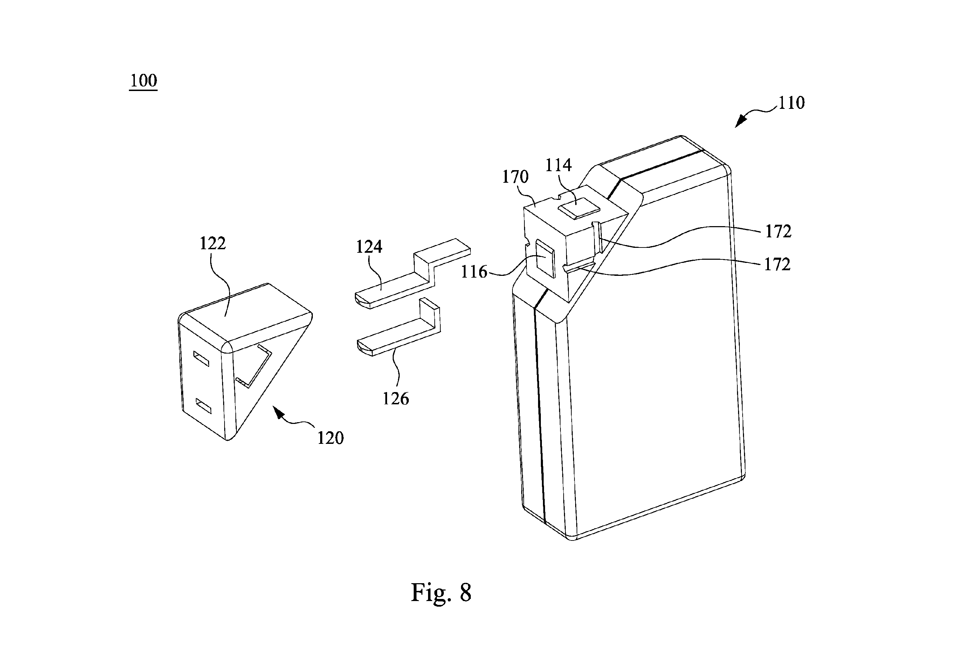

Fig. 8 is an exploded view of an electronic device according to another embodiment of this invention. The electronic device 100 comprises the electronic device body 110 and the connector component 120. The connector component 120 is detachably connected to the electronic device body 110. In the present embodiment, the connector component 120 may be connected to the electronic device body 100 through plugging. In greater detail, a triangular base 170 may be disposed on the electronic device body 110. A material of the triangular base 170 may be an insulation material. The two terminals 114, 116 may be positioned respectively on two side surfaces of the triangular base 170 and face two different directions. The pins 124, 126 on the connector component 120 may also be designed to bend, but the resent invention is not limited in this regard. The pins 124, 126 may be exposed from the connector casing 122. The pins 124, 126 may be parallel and have common extended direction at the exposed side. The pins 124, 126 may be in different extended directions and have different extended lengths at the hidden side.

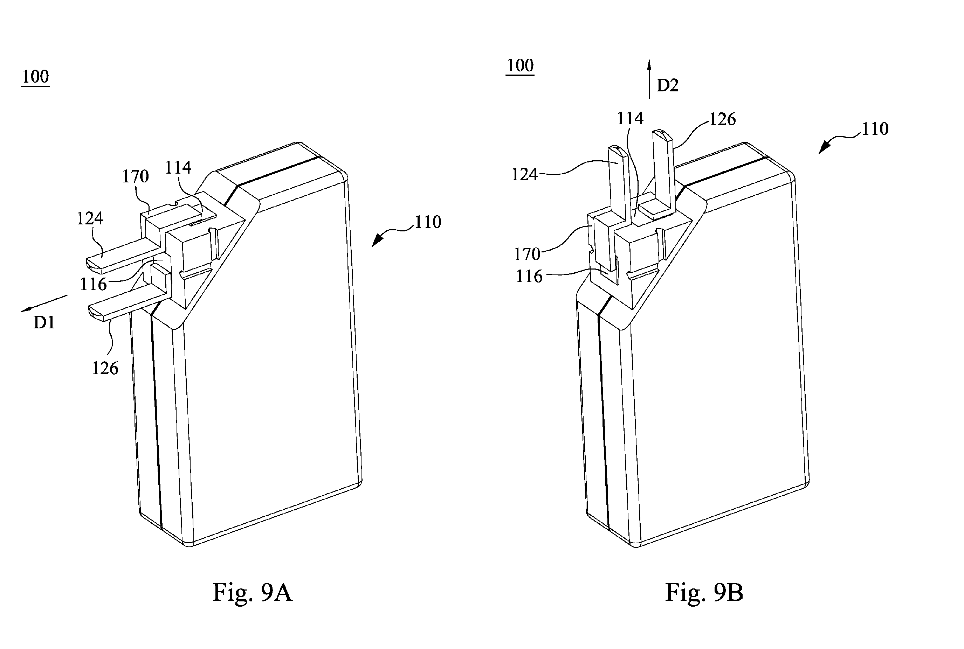

Fig. 9A and Fig. 9B are schematic diagrams of the electronic device in Fig. 8 after being assembled respectively in the first mode and the second mode. It is noted that in order to provide a clear understanding of the technical content of present embodiment, the connector casing is hidden in the figures.

In Fig. 9A, when the connector component 120 is connected to the electronic device body 110 in the first mode, one end of each of the pins 124, 126 used for connecting the electrical power extends in the first extended direction D1. The other end of the first pin 124 is connected to the first terminal 114 on one side surface of the triangular base 170. The other end of the second pin 126 is connected to the second terminal 116 on another side surface of the triangular base 170. Since an angle formed between the first terminal 114 and the second terminal 116 may be approximately 90 degrees, directions that the other ends of the first pin 124 and the second pin 126 point in may be approximately perpendicular to each other. However, the present invention is not limited in this regard; it is within the scope of the present invention once the pins can be electrically connected to the terminals.

In Fig. 9B, when the connector component 120 is connected to the electronic device body 110 in the second mode, the one end of each of the pins 124, 126 used for connecting the electrical power extends in the second extended direction D2. The other end of the first pin 124 is connected to the second terminal 116. The other end of the second pin 126 is connected to the first terminal 114.

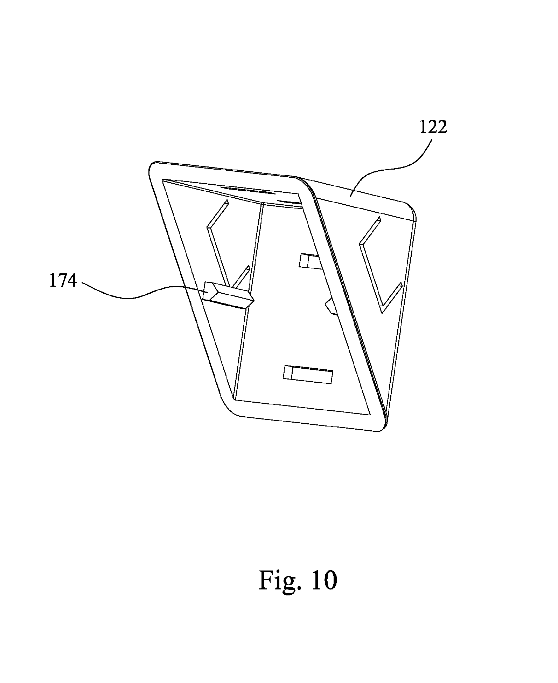

A description is provided with reference to Fig. 8 and Fig. 10. Fig. 10 is a schematic diagram of the connector casing 122 in Fig. 8 viewed from another angle. The triangular base 170 of the electronic device body 110 may have grooves 172 in parallel with the first extended direction D1 and the second extended direction D1. Strip projections 174 may be disposed on an inner wall of the connector casing 122. When the connector component 120 is connected with the electronic device body 110, the strip projections 174 may slide in the grooves 172, but the invention is not limited in this regard.

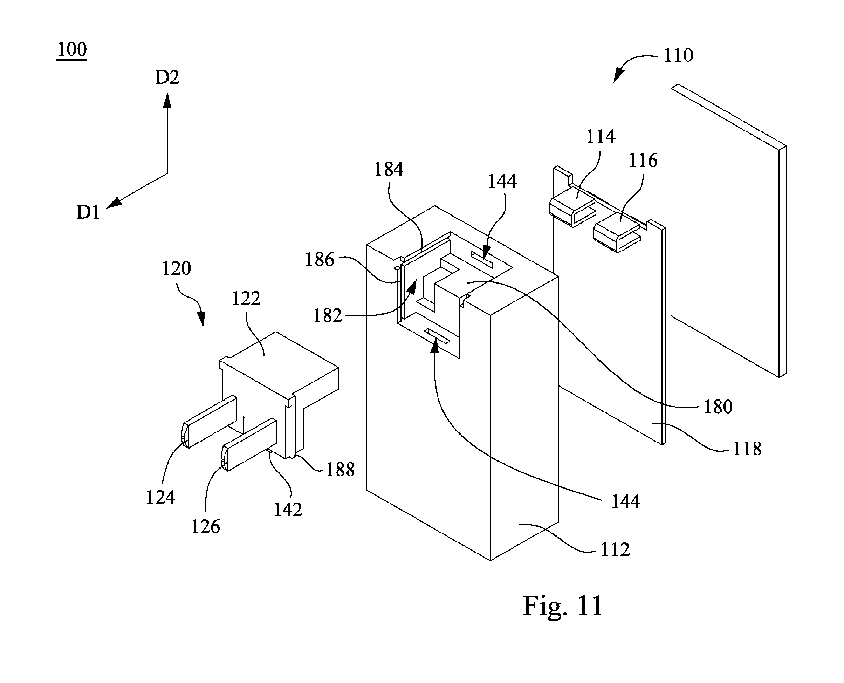

Fig. 11 is an exploded view of an electronic device according to still another embodiment of this invention. The major difference between the present embodiment and the previous embodiments comprises that the connector component 120 of the electronic device 100 may not be located at the corner, rather, it may be located on one of side surfaces of the electronic device 100. The electronic device 100 may comprise a circuit board 118. The two terminals 114, 116 may be fixed on the circuit board 118. The housing 112 of the electronic device 100 may have a step platform 180. The step platform 180 may be positioned in a recess of the housing 112. Openings 182 may be positioned on two sides of the step platform 180. Positions and sizes of the openings 182 may correspond to the terminals 114, 116, so that the terminals 114, 116 may be exposed from the openings 182 on the two sides of the step platform 180 after the housing 112 has been connected. However, the invention is not limited in this regard.

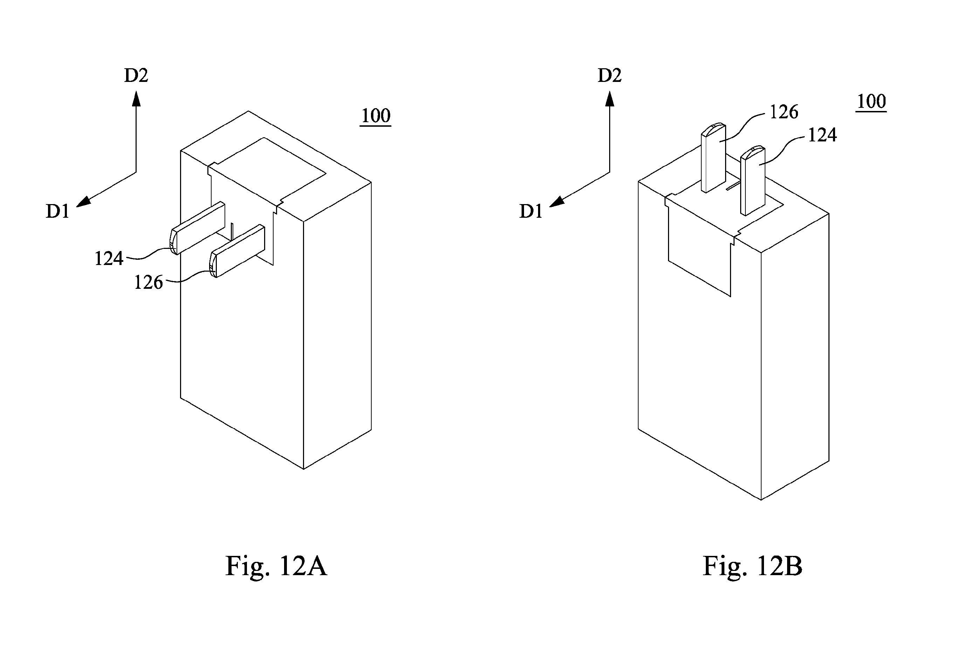

The connector component 120 comprises the connector casing 122 and the pins 124, 126. The housing 112 may have two sets of sliding grooves 184, 186, each of the two sets of sliding grooves 184, 186 may be disposed on two opposite sides of the step platform 180. A set of sliding blocks 188 may be disposed on the connector casing 122. The one set of sliding grooves 184 and the other set of sliding grooves 186 may be disposed respectively along the first extended direction D1 and the second extended direction D2. The connector component 120 can be combined with one of the two sets of the sliding grooves 184, 186 selectively with the sliding blocks 188 so as to change a direction of the pins 124, 126. For example, if the sliding blocks 188 are engaged with the sliding grooves 186 disposed along the second extended direction D2, the pins 124, 126 extend in the first extended direction D1 when the connector component 120 is connected to the electronic device body 110, as shown in Fig. 12A. If the sliding blocks 188 are engaged with the sliding grooves 184 disposed along the first extended direction D1, the pins 124, 126 extend in the second extended direction D2 when the connector component 120 is connected to the electron device body 110, as shown in Fig. 12B. However, the invention is not limited in this regard.

In order to further ensure the reliability when the connector component 120 is connected to the electronic device body 110, two slots 144 may be formed on the housing 112. A hook 142 may be disposed on the connector casing 122. Thus, the hook 142 can be plugged into the slot 144 correspondingly when the sliding blocks 188 are engaged with the sliding grooves 184 or the sliding grooves 186.

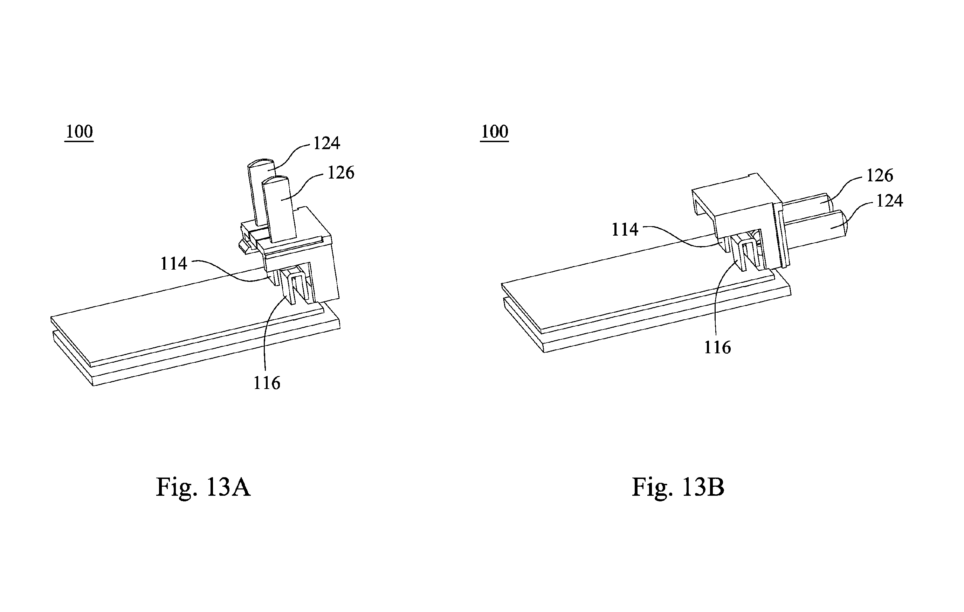

Fig. 13A and Fig. 13B are schematic diagrams of the electronic device respectively in Fig. 12A and Fig. 12B after being assembled with part of the housing being hidden. The terminals 114, 116 may have shape of L to allow the pins 124, 126 to be electrically connected to the terminals 114, 116 in different extended directions.

The present invention has various embodiments. Although two pins and two terminals are provided in the above embodiments for illustration, the present invention may also be applied to other designs, for example, a three-pin plug. The pins are not limited to a flat pin, and may be a cylindrical pin, or a square pin or other forms, depending on the specification of the plug. The connections between pins and the terminals are not limited to mechanical connections, and should be understood as electrical connections. The electrical connections may be achieved by direct contacts between the pins and the terminals, or may be achieved by middle conductors which connect the pins and the terminals, or may be achieved by other methods. The cooperation and connection between the connector component and the electronic device body may be achieved by various methods, or by combinations of methods. In order to reduce the interface resistance and improve the safety for electrical connection, an internal elastic element or magnetic element may be added to improve the connection reliability, but the present invention is not limited in this regard.

A kind of electronic equipment utilizing the electronic device is provided. The electronic equipment may be, for example, a communication equipment or a computer. The communication equipment may be, for example, a mobile phone, a mobile base station, or a Bluetooth transmission device. The computer may be, for example, the notebook computer shown in Fig. 1, a tablet personal computer, a personal digital assistant, or a desktop computer.

According to the above embodiments, the electronic device provided by the embodiments of the present invention may provide different plugging directions. The pins are thus allowed to be plugged into, for example, the electric socket, in different directions selectively and it solves the problem that too many chargers cannot be charged at the same time because of space congestion.

Although the present invention has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An electronic device (100), **characterized by** comprising:
an electronic device body (110) comprising a housing (112) and at least two terminals (114, 116), and
a connector component (120) detachably connected to the electronic device body (110), the connector component (120) comprising a connector casing (122) and at least two pins (124, 126), the pins (124, 126) being in a first extended direction (D1) when the connector component (120) is connected to the electronic device body (110) in a first mode, the pins (124, 126) being in a second extended direction (D2) when the connector component (120) is connected to the electronic device body(110) in a second mode, an angle being formed between the first extended direction (D1) and the second extended direction (D2).

2. The electronic device (100) of claim 1, **characterized in that** the terminals (114, 116) comprise at least a first terminal (114) and a second terminal (116), the pins (124, 126) comprise at least a first pin (124) and a second pin (126), the first pin (124) is electrically connected to the first terminal (114) and the second pin (126) is electrically connected to the second terminal (116) when the connector component (120) is connected to the electronic device body (110) in the first mode, the first pin (124) is electrically connected to the second terminal (116) and the second pin (126) is electrically connected to the first terminal (114) when the connector component (120) is connected to the electronic device body (110) in the second mode.

3. The electronic device (100) of claim 1, **characterized in that** the first extended direction (D1) is perpendicular to the second extended direction (D2).

4. The electronic device (100) of claim 1, **characterized in that** the connector casing (122) has an appearance symmetrical to a center line of the terminals (114, 116).

5. The electronic device (100) of claim 1, **characterized in that** the pins (124, 126) have different lengths.

6. The electronic device (100) of claim 1, **characterized in that** the electronic device (100) is a charger or a mobile power supply.

7. The electronic device (100) of claim 1, **characterized in that** the electronic device body (110) and the connector component (120) respectively have slide structures (132, 134) corresponding to each other.

8. The electronic device (100) of claim 1, **characterized in that** magnetic elements (152, 154) are disposed on the electronic device body (110) and the connector component (120).

9. The electronic device (100) of claim 1, **characterized in that** at least one hook (142) and at least one slot (144) are respectively disposed on the connector component (120) and the electronic device body (110).

10. The electronic device (100) of claim 1, **characterized in that** a cylindrical projection (160) is disposed on the electronic device body (110), an outer wall (162) of the cylindrical projection has a screw thread, a sleeve portion (164) is formed in the connector component (120), an inner wall (166) of the sleeve portion has a screw thread.

11. The electronic device (100) of claim 1, **characterized in that** a triangular base (170) is disposed on the electronic device body (110), the terminals (114, 116) are respectively positioned on two side surfaces of the triangular base (170).

12. The electronic device (100) of claim 1, **characterized in that** two of the terminals (114, 116) are in the first extended direction (D1) and in the second extended direction (D2) respectively.

13. The electronic device (100) of claim 1, **characterized in that** the electronic device (100) further comprising a circuit board (118), the terminals (114, 116) being disposed on the circuit board (118).

14. The electronic device (100) of claim 13, **characterized in that** the electronic device body (110) comprises:
a step platform (180); and
two openings (182) respectively disposed on two sides of the step platform (180) to match the terminals (114, 116).

15. The electronic device (100) of claim 1, **characterized in that** the electronic device (100) is in a shape of a hexahedron, the connector component (120) is located at a corner or a side of the electronic device (100).
